# EUROPEAN PATENT SPECIFICATION

(11) **EP 3 305 569 B1**
(45) Date of publication and mention of the grant of the patent: **20.10.2021**
(21) Application number: 16771187.8
(22) Date of filing: 24.02.2016
(51) Int. Cl.: B60J 11/02

(54) **DUAL-MODE AUTOMOBILE SHELTER**
DUALMODUS-UNTERSTAND FÜR KRAFTFAHRZEUG
ABRI AUTOMOBILE BIMODE

(30) Priority: 27.03.2015 CN 201520177673 U
(43) Date of publication of application: 11.04.2018
(73) Proprietor: Wong, Waiying, Sheung Shui N.T. Hong Kong (CN); Kok Yin, Low, Sidcup Kent DA15 8WF (GB); Wai Lit Low, Andrew, Sidcup Kent DA15 8WF (GB)
(72) Inventor: HUANG, Weiquan, Linhai Zhejiang 317000 (CN)
(74) Representative: Sebastian, Jens
(86) International application number: PCT/CN2016/074432
(87) International publication number: WO 2016/155432

(56) References cited:
- EP-A2- 1 944 183
- CN-U- 201 970 834
- CN-U- 201 970 834
- CN-U- 202 038 149
- CN-U- 202 038 149
- CN-U- 204 567 246
- US-A1- 2005 212 322
- US-A1- 2006 232 095
- US-A1- 2006 232 095

## Description

### FIELD OF THE INVENTION

The present disclosure relates to the field of automobile protective covers, and more particularly, to a dual-mode device for unfolding and retracting automobile protective cover.

### BACKGROUND OF THE INVENTION

At present there are mainly two types of automobile protective cover device in the market: the manual type and the electric type.

The manual type automobile protective cover device is of great inconvenience as it can only be actuated without electricity and by manual operation to unfold and retract the cover.

The electric type mainly automatically unfolds and retracts the protective cover which is fixed to a rotary shaft via the electricity-driven rotary shaft. If the power of the motor is cut off when the device is in operation, it will be very difficult to retract or unfold the protective cover.

There is a need in the art of an automobile protective cover device that can work both manually and electrically through easy and convenient operation.

US20050212322A1 discloses a retractable vehicle cover apparatus for covering a vehicle. The retractable vehicle cover apparatus for selectively covering a vehicle broadly comprises an elongated, hollow housing, and axle disposed within the housing for rotational movement about a central axis, and an elongated, expandable cover having a first, distal end and a second, proximal end coupled with the axle. The housing includes side wall structure having an elongated aperture presenting a length defined through the wall structure. The proximal end of the cover is fed through the aperture so that the cover may be selectively moved between a retracted position where the cover is wrapped around the axle, and an extended position where a substantial portion of the cover extends from the housing.

### SUMMARY OF THE INVENTION

The present invention aims to provide a dual-mode automobile protective cover device that mainly works under electric power with manual operation as a back-up choice. It can be realized through the following technical solutions:
The dual-mode automobile protective cover device comprises an outer housing, in which a rotary shaft is fitly arranged, wherein, the outer housing comprises three parts: a cabin, a cabin cover A and a cabin cover B. The cabin is detachably or fixedly connected to the cabin cover A and the cabin is detachably or fixedly connected to the cabin cover B. A wire slot is provided on a wall of the cabin accordingly, and electric wires are buried therein. A control box and a motor box are respectively arranged at two ends of the outer housing, one end of the rotary shaft is fitly connected with the cabin cover B, and the other end of the rotary shaft is fitly connected with the motor box by passing through the cabin cover A. The motor box is detachably connected to the cabin cover A and the rotary shaft. The motor box is provided with a contact chip A, and the cabin cover A is provided with a contact chip B, one end of the electric wire is fitly connected with the contact chip B, and the other end of the electric wire is fitly connected with the control box. A rechargeable battery is configured within the control box, and a charge socket is arranged on the control box. The motor box can be replaced by a hand-operated rocker.

Furthermore, a protective cover guard disc is provided at each of the two ends of the cabin.

Preferably, the motor box and the cabin cover A are connected by means of snap-fits, a snap-in slot is provided on the cabin cover A and a snap-fit is provided on the motor box, wherein the snap-fit is made up of a male part and a female part. The female part is cut with a groove, in which a sliding bar and a spring are configured; the male part, which is of Z shape, has a sliding slot in its front end, the sliding slot is in slide connection with the sliding bar, and a hook, which can be buckled with the snap-in slot, is arranged at the back end of the male part.

Preferably, the cabin cover A can be provided with two snap-in slots, and accordingly the motor box can be provided with two snap-fits.

Preferably, a contact chip A is provided on the control box, a contact chip B is provided on the cabin cover B, and the other end of the electric wire is fitly connected with the contact chip B.

Preferably, the control box and the cabin cover B are connected by means of a snap-fit, a snap-in slot is provided on the cabin cover B and a snap-fit is provided on the control box, wherein the snap-fit is made up of a male part and a female part. The female part has a groove, in which a sliding bar and a spring are arranged; the male part, which is of Z shape, has a sliding slot in its front end, the sliding slot is in slide connection with the sliding bar, and a hook that can be buckled with the snap-in slot is arranged at the back end of the male part.

Preferably, the cabin cover B can be provided with two snap-in slots, and accordingly the control box can be provided with two snap-fits.

Preferably, the control box is provided with a control button and an indicator light. Preferably, the cabin is provided with an anti-slide mat, the material of which comprises sponge.

Preferably, the invention can be operated remotely through a remote control. Compared with the prior arts, the present invention has the following advantages: Firstly, as the invention can operate under either electric power or manual operation, even if the electricity is cut off, the protective cover can still be retracted or unfolded quickly through manual operation. Secondly, with the male part and the female part under slide connection, it enables easy disassembling between a motor box cover and the cabin cover A as well as a control box cover and the cabin cover B.

### BRIEF DESCRIPTION OF THE DRAWINGS

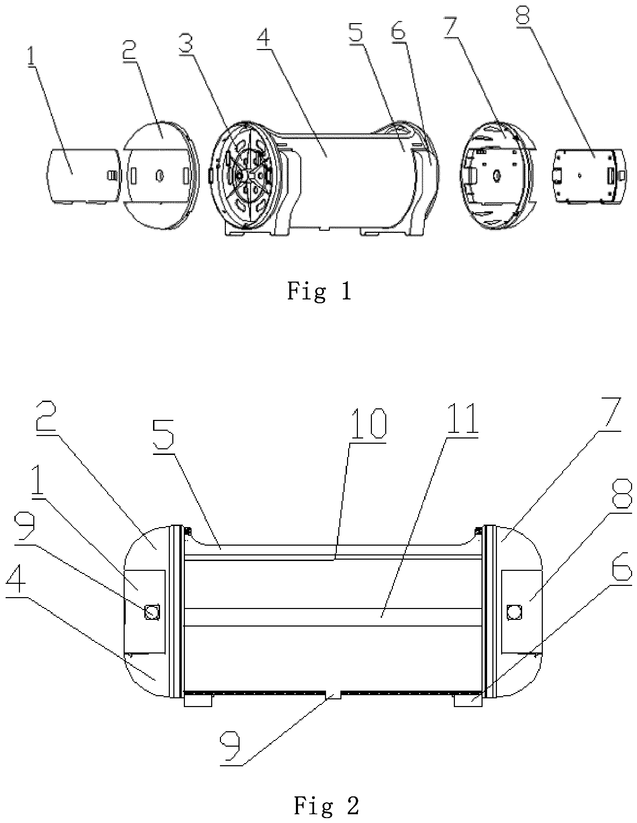

Fig.1 is a structural schematic diagram of the invention under the electricity-driven state;
Fig. 2 is a sectional diagram of the rear view of the invention;

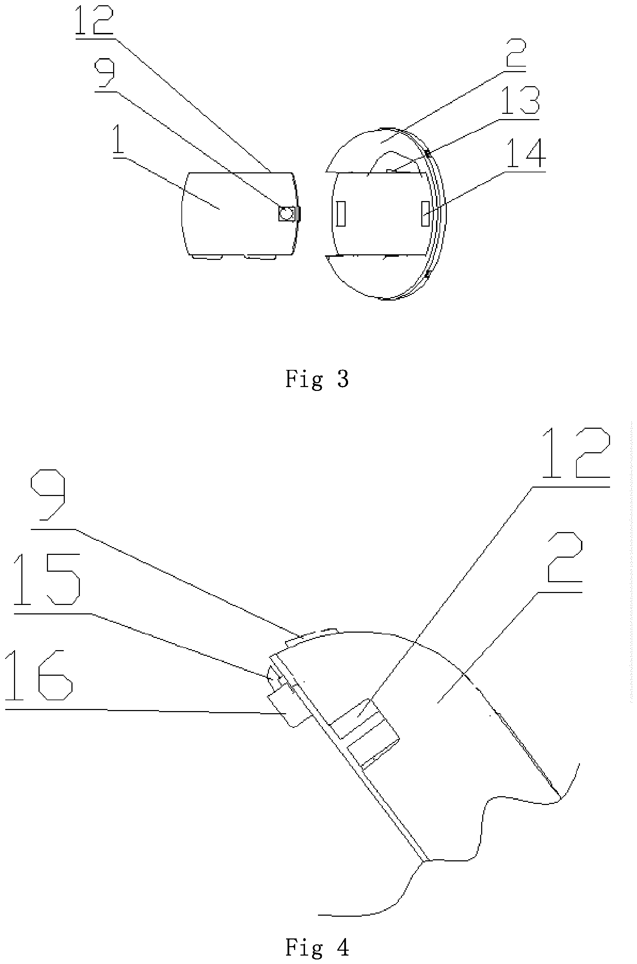

Fig.3 is a structural schematic diagram of the motor box and the cabin cover A of the invention;
Fig.4 is a structural schematic diagram of the motor box and the snap-fit of the invention;
Fig.5 is a structural schematic diagram of the control box and cabin cover B of the invention;

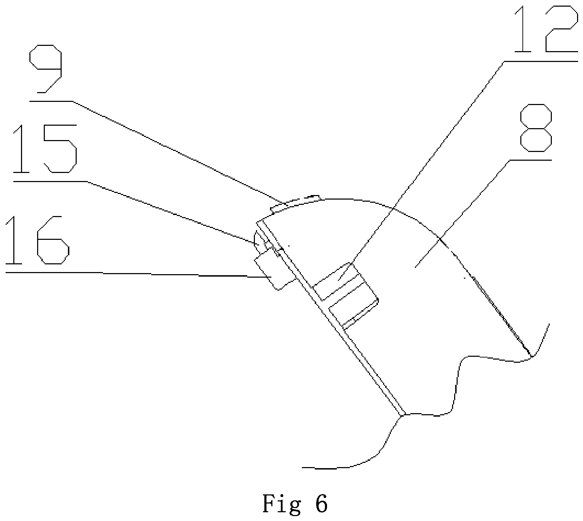

Fig.6 is a structural schematic diagram of the control box and the snap-fit of the invention;

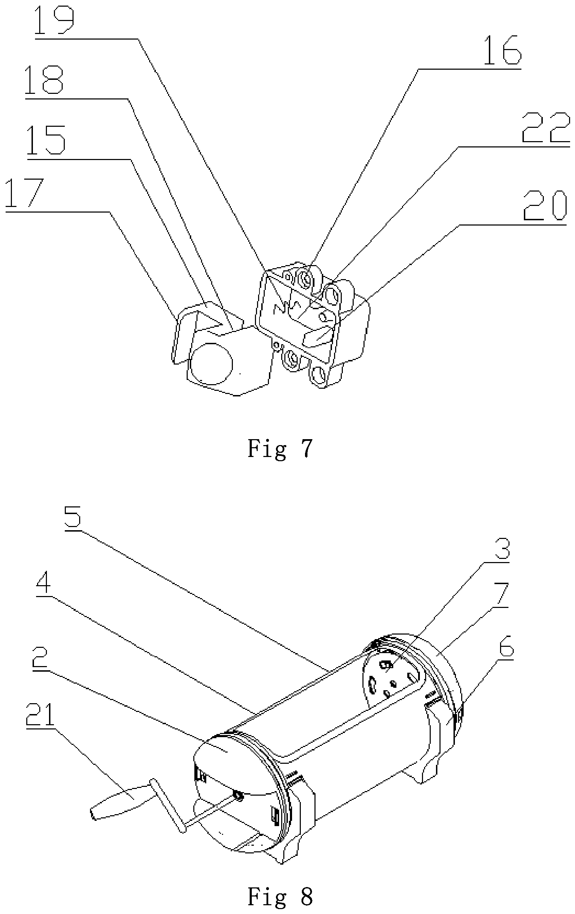

Fig.7 is a structural schematic diagram of the snap-fit of the invention;
Fig.8 is a structural schematic diagram of the invention under the manual-operated state;

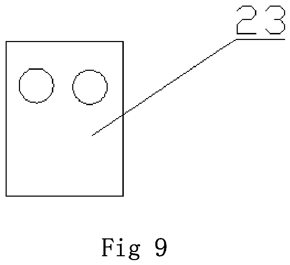

Fig.9 is a structural schematic diagram of the remote control for the invention.

Description of the reference numerals of the drawings: 1-motor box, 2-cabin cover A, 3-protective cover guard disc, 4-outer housing, 5-cabin, 6-anti-slide mat, 7-cabin cover B, 8-control box, 9- snap-fit, 10-wire slot, 11-rotary shaft, 12-contact chip A, 13-contact chip B, 14-snap-in slot, 15-male part, 16-female part, 17-hook, 18-sliding slot, 19-spring, 20-sliding bar, 21-hand-operated rocker, 22-groove, 23-remote control.

### DETAILED DESCRIPTION

The present disclosure is further described hereafter with reference to the drawings and embodiments.

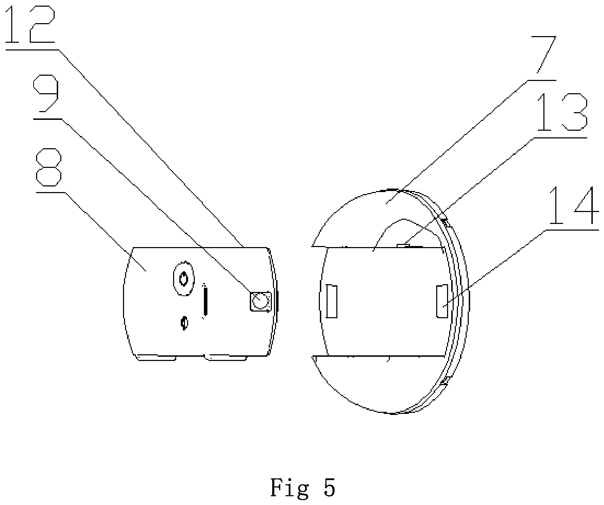

Referring to Fig, 1 to Fig. 5, the invention comprises an outer housing 4 provided with a rotary shaft 11 therein, and the outer housing 4 comprises three parts: a cabin 5, a cabin cover A 2 and a cabin cover B 7. The cabin 5 is detachably or fixedly connected with the cabin cover A 2 and is detachably or fixedly connected with the cabin cover B 7. Each of the two ends of the cabin 5 is provided with a protective cover guard disc 3, which prevents the protective cover from getting stuck in the cabin cover A2 or the cabin cover B7 in the process of unfolding or retracting. The cabin 5 is provided with an anti-slide mat 6, the material of which comprises sponge. A wire slot 10 is provided on a wall of the cabin 5, and the wire slot 10 has an electric wire therein. A control box 8 and a motor box 1 are respectively arranged at two ends of the outer housing 4, one end of the rotary shaft 11 is fitly connected with the cabin cover B 7, and the other end of the rotary shaft 11 is fitly connected with the motor box 1 after it passes through the cabin cover A 2. The motor box 1 is detachably connected with the cabin cover A 2 and the rotary shaft 11. The motor box 1 and the cabin cover A 2 are connected by means of a snap-fit 9, a snap-in slot 14 is provided on the cabin cover A and a snap-fit 9 is provided on the motor box 1. The amount of the snap-in slot 14 provided on the cabin cover A can be two, and accordingly the amount of the snap-fit 9 provided on the motor box 1 can be two. The snap-fit 9 is made up of a male part 15 and a female part 16. The female part 16 is cut with a groove 22, in which a sliding bar 20 and a spring 19 are arranged; the male part 15, which is of Z shape, is provided with a sliding slot 18 accordingly in its front end, the sliding slot 18 is in slide connection with the sliding bar 20, and a hook 17 that can be buckled with the snap-in slot is arranged at the back end of the male part 15. When the hook 17 clasps the snap-in slot 14, the motor box 1 is fixed firmly with the cabin cover A 2; by pushing the male part 15 inward, the hook 17 is separated from the snap-in slot 14, thus the connection between the motor box 1 and the cabin cover A 2 is unfastened. The motor box 1 can be replaced by a hand-operated rocker 21. The motor box 1 is provided with a contact chip A 12, the cabin cover A 2 is provided with a contact chip B 13, and one end of the electric wire is connected to the contact chip B 13, and the other end of the electric wire is connected to the control box 8. The control box 8 is provided with a contact chip A 12, and the cabin cover B 7 is provided with a contact chip B 13. The cabin cover B 7 can be provided with two snap-in slots 14 and the control box 8 can be provided with two snap-fits 9. The control box 8 and the cabin cover B 7 are connected in the same way as that of the motor box 1 and the cabin cover A. The control box 8 is provided with a control button and an indicator light. The invention can be operated from a distance through a remote control 23.

Lastly, it should be specified that the invention is not limited to the embodiments described above and extends to all the embodiments covered by the claims.

## Claims

1. A dual-mode automobile protective cover device comprises an outer housing (4) in which a rotary shaft (11) is arranged, wherein the outer housing (4) comprises three parts: a cabin (5), a cabin cover A (2) and a cabin cover B (7), the cabin (5) is detachably or fixedly connected to the cabin cover A (2) and the cabin (5) is detachably or fixedly connected to the cabin cover B (7); a wire slot (10) is provided on a wall of the cabin (5), and the wire slot (10) has an electric wire buried therein; a control box (8) and a motor box (1) are respectively arranged at two ends of the outer housing (4), one end of the rotary shaft (11) is fitly connected with the cabin cover B (7), and the other end of the rotary shaft (11) is fitly connected with the motor box (1)by passing through the cabin cover A (2), the motor box (1) is detachably connected to the cabin cover A (2) and the rotary shaft (11); the motor box (1) is provided with a contact chip A (12), and the cabin cover A (2) is provided with a contact chip B (13), one end of the electric wire is connected with the contact chip B (13), and the other end of the electric wire is connected with the control box (8); a rechargeable battery is configured within the control box (8) and a charge socket is arranged on the control box (8); the motor box (1) can be replaced by a hand-operated rocker (21),
**characterized in that** the dual-mode automobile protective cover device further comprises a protective cover guard disc (3) provided at each of the two ends of the cabin (5), which prevents a protective cover from getting stuck in the cabin cover A (2) or the cabin cover B (7) in the process of unfolding or retracting.

2. The dual-mode automobile protective cover device according to claim 1, wherein the motor box (1) and the cabin cover A (2) are connected by means of a snap-fit (9), a snap-in slot (14) is provided on the cabin cover A (2) and a snap-fit (9) is provided on the motor box (1), wherein the snap-fit (9) is made up of a male part (15) and a female part (16), the female part (16) is cut with a groove (22) in which a sliding bar (20) and a spring (19) are arranged; the male part (15), which is of Z shape, has a sliding slot (18) in its front end, the sliding slot (18) is in slide connection with the sliding bar (20), and a hook (17) that can be buckled with the snap-in slot (14) is arranged at the back end of the male part (15).

3. The dual-mode automobile protective cover device according to claim 2, wherein the cabin cover A (2) can be provided with two snap-in slots (14), and accordingly the motor box (1) can be provided with two snap-fits (9).

4. The dual-mode automobile protective cover device according to claim 1, wherein a contact chip A (12) is arranged on the control box (8), a contact chip B (13) is arranged on the cabin cover B (7), and the other end of the electric wire is fitly connected with the contact chip B (13).

5. The dual-mode automobile protective cover device according to claim 1, wherein, the control box (8) and the cabin cover B(7) are connected by means of a snap-fit (9), a snap-in slot (14) is arranged in the cabin cover B (7) and a snap-fit (9) is arranged on the control box (8); the snap-fit (9) is made up of a male part (15) and a female part (16); a groove, in which a sliding bar (20) and a spring (19) are arranged, is provided in the female part (16); the male part is Z-shaped, a sliding slot (18), which is in slip connection with the sliding bar (20), is arranged in the front end of the male part (15), and a hook (17), which can be buckled with the snap-in slot (14), is arranged at the back end of the male part (15).

6. The dual-mode automobile protective cover device according to claim 5, wherein the cabin cover B (7) can be configured with two snap-in slots (14), and accordingly the control box (8) can be arranged with two snap-fits (9).

7. The dual-mode automobile protective cover device according to claim 1, wherein, the control box (8) is provided with a control button and an indicator light.

8. The dual-mode automobile protective cover device according to claim 1, wherein, the cabin (5) is provided with an anti-slide mat (6), the material of which comprises sponge.

9. The dual-mode automobile protective cover device according to claim 1, wherein, the invention can be operated remotely through a remote control (23).

## Patentansprüche

1. Dualmodus-Autoschutzabdeckungsvorrichtung umfasst ein äußeres Gehäuse (4), in dem eine Drehwelle (11) angeordnet ist, wobei das äußere Gehäuse (4) drei Teile umfasst: eine Kabine (5), eine Kabinenabdeckung A (2) und eine Kabinenabdeckung B (7), die Kabine (5) lösbar oder fest mit der Kabinenabdeckung A (2) verbunden ist und die Kabine (5) lösbar oder fest mit der Kabinenabdeckung B (7) verbunden ist; ein Drahtschlitz (10) an einer Wand der Kabine (5) bereitgestellt ist und der Drahtschlitz (10) einen elektrischen Draht darin enthält; eine Steuerbox (8) und eine Motorbox (1) jeweils an zwei Enden des äußeren Gehäuses (4) angeordnet sind, ein Ende der Drehwelle (11) passend mit der Kabinenabdeckung B (7) verbunden ist und das andere Ende der Drehwelle (11) durch Verlaufen durch die Kabinenabdeckung A (2) passend mit der Motorbox (1) verbunden ist, die Motorbox (1) lösbar mit der Kabinenabdeckung A (2) und der Drehwelle (11) verbunden ist; die Motorbox (1) mit einem Kontaktchip A (12) versehen ist und die Kabinenabdeckung A (2) mit einem Kontaktchip B (13) versehen ist, ein Ende des elektrischen Drahts mit dem Kontaktchip B (13) verbunden ist und das andere Ende des elektrischen Drahts mit der Steuerbox (8) verbunden ist; eine ladbare Batterie in der Steuerbox (8) ausgelegt ist und eine Ladebuchse auf der Steuerbox (8) angeordnet ist; die Motorbox (1) durch einen handbetätigten Kippschalter (21) ersetzt werden kann,
**dadurch gekennzeichnet, dass** die Dualmodus-Autoschutzabdeckungsvorrichtung ferner eine Schutzabdeckungsabschirmscheibe (3) umfasst, die an jedem der zwei Enden der Kabine (5) bereitgestellt ist und verhindert, dass sich eine Schutzabdeckung im Prozess des Entfaltens oder des Zurückziehens in der Kabinenabdeckung A (2) oder der Kabinenabdeckung B (7) verfängt.

2. Dualmodus-Autoschutzabdeckungsvorrichtung nach Anspruch 1, wobei die Motorbox (1) und die Kabinenabdeckung A (2) mittels einer Schnappverbindung (9) verbunden sind, ein Schnappschlitz (14) auf der Kabinenabdeckung A (2) bereitgestellt ist und eine Schnappverbindung (9) auf der Motorbox (1) bereitgestellt ist, wobei die Schnappverbindung (9) aus einem Einsteckteil (15) und einem Aufnahmeteil (16) besteht, in das Aufnahmeteil (16) eine Nut (22) geschnitten ist, in der eine Gleitstange (20) und eine Feder (19) angeordnet sind, das Einsteckteil (15), das eine Z-Form aufweist, an seinem vorderen Ende einen Gleitschlitz (18) hat, der Gleitschlitz (18) mit der Gleitstange (20) in Gleitverbindung ist und ein Haken (17), der in den Schnappschlitz (14) eingeklinkt werden kann, am hinteren Ende des Einsteckteils (15) angeordnet ist.

3. Dualmodus-Autoschutzabdeckungsvorrichtung nach Anspruch 2, wobei die Kabinenabdeckung A (2) mit zwei Schnappschlitzen (14) versehen werden kann und die Motorbox (1) entsprechend mit zwei Schnappverbindungen (9) versehen werden kann.

4. Dualmodus-Autoschutzabdeckungsvorrichtung nach Anspruch 1, wobei ein Kontaktchip A (12) auf der Steuerbox (8) angeordnet ist, ein Kontaktchip B (13) auf der Kabinenabdeckung B (7) angeordnet ist und das andere Ende des elektrischen Drahts passend mit dem Kontaktchip B (13) verbunden ist.

5. Dualmodus-Autoschutzabdeckungsvorrichtung nach Anspruch 1, wobei die Steuerbox (8) und die Kabinenabdeckung B (7) mittels einer Schnappverbindung (9) verbunden sind, ein Schnappschlitz (14) in der Kabinenabdeckung B (7) angeordnet ist und eine Schnappverbindung (9) auf der Steuerbox (8) angeordnet ist; die Schnappverbindung (9) aus einem Einsteckteil (15) und einem Aufnahmeteil (16) besteht; eine Nut, in der eine Gleitstange (20) und eine Feder (19) angeordnet sind, im Aufnahmeteil (16) bereitgestellt ist; das Einsteckteil Z-förmig ist, ein Gleitschlitz (18), der mit der Gleitstange (20) in Gleitverbindung steht, im vorderen Ende des Einsteckteils (15) angeordnet ist und ein Haken (17), der in den Schnappschlitz (14) eingeklinkt werden kann, am hinteren Ende des Einsteckteils (15) angeordnet ist.

6. Dualmodus-Autoschutzabdeckungsvorrichtung nach Anspruch 5, wobei die Kabinenabdeckung B (7) mit zwei Schnappschlitzen (14) ausgelegt werden kann und die Steuerbox (8) entsprechend mit zwei Schnappverbindungen (9) angeordnet werden kann.

7. Dualmodus-Autoschutzabdeckungsvorrichtung nach Anspruch 1, wobei die Steuerbox (8) mit einer Steuertaste und einer Anzeigeleuchte versehen ist.

8. Dualmodus-Autoschutzabdeckungsvorrichtung nach Anspruch 1, wobei die Kabine (5) mit einer Antigleitmatte (6) versehen ist, deren Material Schwamm umfasst.

9. Dualmodus-Autoschutzabdeckungsvorrichtung nach Anspruch 1, wobei die Erfindung mit einer Fernsteuerung (23) fernbedient werden kann.

## Revendications

1. Dispositif de couverture de protection pour automobile bimode comprenant un logeant externe (4) dans lequel un arbre rotatif (11) est agencé, dans lequel le logement externe (4) comprend trois parties : une cabine (5), une couverture de cabine A (2) et une couverture de cabine B (7), la cabine (5) est raccordée de manière détachable ou fixe à la couverture de cabine A (2) et la cabine (5) est raccordée de manière détachable ou fixe à la couverture de cabine B (7) ; une fente de fil (10) est prévue sur une paroi de la cabine (5), et la fente de fil (10) a un fil électrique enfoncé dans cette dernière ; une boîte de commande (8) et une boîte de moteur (1) sont respectivement agencées aux deux extrémités du logement externe (4), une extrémité de l'arbre rotatif (11) est opportunément raccordée avec la couverture de cabine B (7), et l'autre extrémité de l'arbre rotatif (11) est opportunément raccordée avec la boîte de moteur (1) en passant par la couverture de cabine A (2), la boîte de moteur (1) est raccordée de manière détachable à la couverture de cabine A (2) et à l'arbre rotatif (11) ; la boîte de moteur (1) est prévue avec une puce de contact A (12), et la couverture de cabine A (2) est prévue avec une puce de contact B (13), une extrémité du fil électrique est raccordée avec la puce de contact B (13), et l'autre extrémité du fil électrique est raccordée avec la boîte de commande (8) ; une batterie rechargeable est configurée dans la boîte de commande (8) et une douille de chargement est agencée sur la boîte de commande (8) ; la boîte de moteur (1) peut être remplacée par un culbuteur actionné à la main (21),
**caractérisé en ce que** le dispositif de couverture de protection pour automobile bimode comprend en outre un disque de protection de couverture de protection (3) prévu au niveau de chacune des deux extrémités de la cabine (5), qui empêche une couverture de protection de se coincer dans la couverture de cabine A (2) ou la couverture de cabine B (7) lors du processus de dépliage ou de rétraction.

2. Dispositif de couverture de protection pour automobile bimode selon la revendication 1, dans lequel la boîte de moteur (1) et la couverture de cabine A (2) sont raccordées au moyen d'un encliquetage (9), une fente d'encliquetage (14) est prévue sur la couverture de cabine A (2) et un encliquetage (9) est prévu sur la boîte de moteur (1), dans lequel l'encliquetage (9) est composé d'une partie mâle (15) et d'une partie femelle (16), la partie femelle (16) est coupée avec une rainure (22) dans laquelle une barre coulissante (20) et un ressort (19) sont agencés ; la partie mâle (15), qui est en forme de Z, a une fente coulissante (18) dans son extrémité avant, la fente de coulissement (18) est en raccordement de coulissement avec la barre coulissante (20), et un crochet (17) qui peut être verrouillé avec la fente d'encliquetage (14) est agencé au niveau de l'extrémité arrière de la partie mâle (15).

3. Dispositif de couverture de protection pour automobile bimode selon la revendication 2, dans lequel la couverture de cabine A (2) peut être prévue avec deux fentes d'encliquetage (14) et par conséquent la boîte de moteur (1) peut être prévue avec deux encliquetages (9).

4. Dispositif de couverture de protection pour automobile bimode selon la revendication 1, dans lequel une puce de contact A (12) est agencée sur la boîte de commande (8), une puce de contact B (13) est agencée sur la couverture de cabine B (7), et l'autre extrémité du fil électrique est opportunément raccordée avec la puce de contact B (13).

5. Dispositif de couverture de protection pour automobile bimode selon la revendication 1, dans lequel la boîte de commande (8) et la couverture de cabine B (7) sont raccordées au moyen d'un encliquetage (9), une fente d'encliquetage (14) est agencée dans la couverture de cabine B (7) et un encliquetage (9) est agencé sur la boîte de commande (8) ; l'encliquetage (9) est composé d'une partie mâle (15) et d'une partie femelle (16) ; une rainure dans laquelle une barre coulissante (20) et un ressort (19) sont agencés, est prévue dans la partie femelle (16) ; la partie mâle est en forme de Z, une fente coulissante (18), qui est en raccordement de coulissement avec la barre coulissante (20), est agencée dans l'extrémité avant de la partie mâle (15), et un crochet (17) qui peut être verrouillé avec la fente d'encliquetage (14), est agencé au niveau de l'extrémité arrière de la partie mâle (15).

6. Dispositif de couverture de protection pour automobile bimode selon la revendication 5, dans lequel la couverture de cabine B (7) peut être configurée avec deux fentes d'encliquetage (14) et par conséquent la boîte de commande (8) peut être agencée avec deux encliquetages (9).

7. Dispositif de couverture de protection pour automobile bimode selon la revendication 1, dans lequel la boîte de commande (8) est prévue avec un bouton de commande et un indicateur lumineux.

8. Dispositif de couverture de protection pour automobile bimode selon la revendication 1, dans lequel la cabine (5) est prévue avec un tapis antiglisse (6), dont le matériau comprend de l'éponge.

9. Dispositif de couverture de protection pour automobile bimode selon la revendication 1, dans lequel l'invention peut être actionnée à distance par le biais d'une télécommande (23).
